# EUROPEAN PATENT SPECIFICATION

(11) **EP 2 834 965 B1**
(45) Date of publication and mention of the grant of the patent: **24.10.2018**
(21) Application number: 12873494.4
(22) Date of filing: 28.09.2012
(51) Int. Cl.: H04M 1/00, H04B 3/03, H04B 3/54

(54) **PUSH BUTTON CONFIGURATION FOR HYBRID NETWORK DEVICES**
DRUCKKNOPFKONFIGURATION FÜR HYBRIDE NETZWERKVORRICHTUNGEN
CONFIGURATION DE BOUTON-POUSSOIR POUR DISPOSITIFS RÉSEAU HYBRIDES

(30) Priority: 05.04.2012 US 201261620828 P
(43) Date of publication of application: 11.02.2015
(73) Proprietor: Qualcomm Incorporated, San Diego, CA 92121-1714 (US)
(72) Inventor: XU, Kegang, San Jose, California 95110 (US); CHEN, Zhi, San Jose, California 95110 (US)
(74) Representative: Wegner, Hans
(86) International application number: PCT/CN2012/082247
(87) International publication number: WO 2013/149459

(56) References cited:
- EP-A1- 2 383 901
- EP-A1- 2 754 312
- WO-A1-2008/073993
- WO-A2-2008/033399
- US-B2- 7 908 643
- "P1905.1/D02 Draft Standard for Convergent Digital Home Network for Heterogeneous Technologies", , 14 December 2011 (2011-12-14), pages 1-80, XP055054554, Piscataway, NJ, USA Retrieved from the Internet: URL:http://ieeexplore.ieee.org/stampPDF/ge tPDF.jsp?tp=&arnumber=6112147 [retrieved on 2013-02-26]
- Ieee: "IEEE P1905.1 D02 Draft Standard for Convergent Digital Home Network for Heterogeneous Technologies", IEEE Xplore, 22 December 2011 (2011-12-22), pages 1-80, XP055408261, ISBN: 978-0-7381-7434-1 Retrieved from the Internet: URL:http://ieeexplore.ieee.org/ielx5/61121 45/6112146/06112147.pdf [retrieved on 2017-09-20]

## Description

### BACKGROUND

Embodiments of the inventive subject matter generally relate to the field of communication networks and, more particularly, to a push button initiated procedure for connecting hybrid network devices.

Hybrid communication networks typically comprise multiple network devices that implement multiple networking technologies (e.g., wireless local area network (WLAN) technologies, powerline communication technologies, Ethernet, etc.). Typically, the communication mechanisms and protocol specifics (e.g., device and topology discovery, bridging to other networks, etc.) are unique to each networking technology. The multiple networking technologies are typically interconnected using bridging-capable devices that forward frames between the different network technologies and media to form a single, extended communication network.

US 7,908,643 B2 discloses a method of configuring a network adapter, comprising generating an enrollment supplicant signal in response to an activation command, transmitting the enrollment supplicant signal to an enrollment provider, receiving an enrollment provider signal from the enrollment provider, wherein the enrollment provider signal includes a security management service information, configuring a network adapter in conformance with the security management service information, wherein the network adapter responds to configuring the network adapter by communicating securely across a shared medium.

The "IEEE P1905.1 D02 Draft Standard for Convergent Digital Home Network for Heterogeneous Technologies", published on 22 of December 2011, discloses a push button initiated procedure for connecting hybrid network devices.

### SUMMARY

The invention is defined by the appended independent claims. Dependent claims constitute embodiments of the invention. Any other subject-matter outside the scope of protection of the claims is to be regarded as examples not in accordance with the invention.

### BRIEF DESCRIPTION OF THE DRAWINGS

The present embodiments may be better understood, and numerous objects, features, and advantages made apparent to those skilled in the art by referencing the accompanying drawings.
**Figure 1** is a conceptual diagram including an example push-button initiated secure connection establishment procedure for establishing a plurality of secure communication links between two hybrid devices in a hybrid communication network;
**Figure 2** is a flow diagram illustrating example operations of a hybrid device using a push-button initiated secure connection establishment procedure;
**Figure 3** is a conceptual diagram including an example push-button initiated access point (AP) cloning procedure in a communication network;
**Figure 4** is a flow diagram illustrating example operations for configuring an enrollee in accordance with a registrar of a communication network using a push-button initiated AP cloning procedure;
**Figure 5** is a sequence diagram illustrating example messages that are exchanged between a registrar and an enrollee during a push-button initiated AP cloning procedure;
**Figure 6** is a state diagram illustrating example operations executed by the enrollee during a push-button initiated AP cloning procedure;
**Figure 7** is a state diagram illustrating example operations executed by the registrar during a push-button initiated AP cloning procedure; and
**Figure 8** is a block diagram of one embodiment of an electronic device including a push button initiated procedure for configuring and connecting hybrid devices.

### DESCRIPTION OF EMBODIMENT(S)

The description that follows includes exemplary systems, methods, techniques, instruction sequences, and computer program products that embody techniques of the present inventive subject matter. However, it is understood that the described embodiments may be practiced without these specific details. For instance, although examples refer to access point cloning mechanisms implemented for wireless local area network (WLAN) access points, embodiments are not so limited. In other embodiments, communication devices that implement other suitable standards and technologies (e.g., powerline communication (PLC) technologies) can execute the cloning mechanisms described herein. Also, although examples refer to push-button connection procedures for connecting hybrid devices that connect to a WLAN (e.g., an 802.11 network), a PLC network (e.g., a HomePlug® AV network), and an Ethernet; in other embodiments, the push button connection procedures that can implemented by devices that connect to other suitable communication networks (e.g., WiMAX, Bluetooth®). In other instances, well-known instruction instances, protocols, structures, and techniques have not been shown in detail in order not to obfuscate the description.

A hybrid communication network typically comprises different types of hybrid devices, such as hybrid routers (HR), hybrid clients (HC), hybrid extenders, etc. Each hybrid device typically comprises more than one network interface that connects the hybrid device to a corresponding communication network. For example, the hybrid device may have three network interfaces - a powerline communication (PLC) interface (e.g., a HomePlug AV interface), a WLAN interface (e.g., an IEEE 802.11 interface), and an Ethernet interface that connect the hybrid device to a powerline network, a WLAN, and an Ethernet respectively. Accordingly, two hybrid devices may be communicatively coupled with each other via one or more communication links (e.g., a PLC link, a WLAN link, an Ethernet link, etc.). Additionally, adding new access points to the communication network can involve configuring the new access points with the same configuration as existing access points in the communication network. Typically, procedures to establish one or more secure communication links between the two hybrid devices and to add new access points to an existing network can be time consuming, involve complicated steps, and/or require manual intervention.

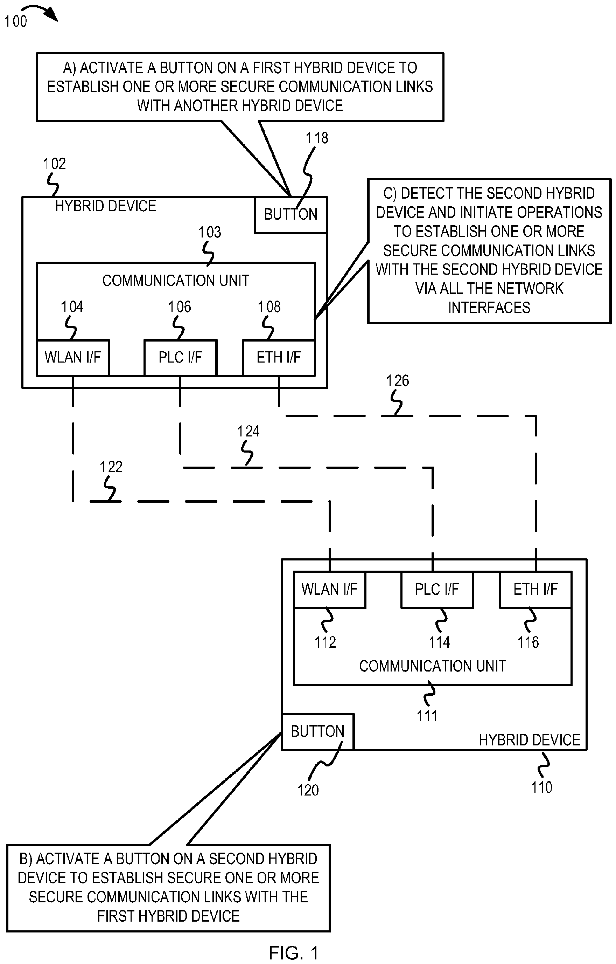

In some embodiments, functionality can be implemented for easily establishing multiple secure communication links between hybrid devices in a hybrid communication network. The hybrid devices in the hybrid communication network can comprise buttons (either physical or virtual) that can be activated to initiate a secure connection establishment process between the hybrid devices. In one example, after a user activates the buttons on a first hybrid device and a second hybrid device, the first hybrid device and the second hybrid device can automatically detect each other. As will be described below in Figures 1 - 2, the first hybrid device and the second hybrid device can initiate operations for establishing/configuring secure communication links via all of their respective network interfaces (e.g., PLC interface, WLAN interface, Ethernet interfaces, etc.). Such a mechanism for initiating establishment of secure communication links between hybrid devices via all the network interfaces by simply activating buttons on each of the hybrid devices can simplify the connection establishment process for the user.

Furthermore, in some embodiments, a new access point can be added to an existing communication network by copying (also referred to as "cloning") configuration parameters from an existing access point to the new access point by activating the buttons associated with the new access point and/or the existing access point. In one example, after a user activates the buttons on the existing access point and the new access point, the new access point can receive configuration parameters (e.g., security parameters) from the existing access point. The new access point can then apply the received configuration parameters to itself to become part of the existing communication network. Such a process for adding a new access point to an existing communication network by simply activating buttons on the new access point and the existing access point can simplify the access point configuration process for the user.

**Figure 1** is a conceptual diagram including an example push-button initiated secure connection establishment procedure for establishing a plurality of secure communication links between two hybrid devices 102 and 110 in a hybrid communication network 100. As depicted in Figure 1, the hybrid device 102 ("first hybrid device") comprises a communication unit 103 and the hybrid device 110 ("second hybrid device") comprises a communication unit 111. The first hybrid device 102 comprises three network interfaces - a WLAN interface 104 (e.g., an 802.11 network interface), a PLC interface 106 (e.g., a HomePlug AV interface), and an Ethernet interface 108. Likewise, the second hybrid device 110 also comprises three network interfaces - a WLAN interface 112, a PLC interface 114, and an Ethernet interface 116. It is noted that in other embodiments, the first hybrid device 102 and the second hybrid device 110 can each comprise any suitable number and type of network interfaces. The first hybrid device 102 and the second hybrid device 110 may have the same number of network interfaces, different number of network interfaces, same type of network interfaces, or different type of network interfaces. The hybrid devices 102 and 110 comprise buttons 118 and 120 respectively (physical or virtual buttons) which can be activated (e.g., pushed) to initiate operations for establishing secure communication links via all the network interfaces. In some embodiments, in lieu of a button, the hybrid device 102 and/or the hybrid device 110 can comprise another suitable triggering device, such as a lever, a knob, a switch, etc. It should be noted that the hybrid devices 102 and 110 can each be electronic devices with hybrid communication capabilities, such as a laptop computer, a tablet computer, a mobile phone, a smart appliance, a gaming console, an access point, a desktop computer, or other suitable electronic devices. Furthermore, the communication unit 103 of the hybrid device 102 can be implemented on a system-on-a-chip (SoC), an application specific integrated circuit (ASIC), or another suitable integrated circuit to enable network communications on the hybrid device 102. Likewise, the communication unit 111 of the hybrid device 110 can be implemented on a SoC, an ASIC, or another suitable integrated circuit to enable network communications on the hybrid device 110. In some embodiments, the communication units 103 and 111 may each be implemented in one or more integrated circuits on one or more circuit boards of the hybrid device 102 and 110 respectively.

At stage A, the button 118 associated with the first hybrid device 102 is activated to establish secure communication links (via all the network interfaces 104, 106, and 108) with another hybrid device of the hybrid communication network 100. In some embodiments, after the button 118 on the first hybrid device 102 is pushed, the first hybrid device 102 (e.g., the communication unit 103) can wait for a pre-determined time interval to detect the presence of a second hybrid device 110 (e.g., to detect whether a button was pushed on another hybrid device). In some embodiments, after the button 118 on the first hybrid device 102 is pushed, the first hybrid device 102 (e.g., the communication unit 103) may broadcast a control message (e.g., a probe message) via some or all of the network interfaces 104, 106, and 108 to indicate that it is ready to establish one or more secure communication links with another hybrid device. In some embodiments, after the button 118 associated with the first hybrid device 102 is activated, the first hybrid device 102 can start a timer (e.g., a "connect" timer comprising a predetermined connect time interval). The value of the "connect" timer can indicate how long the first hybrid device 102 should wait to detect the second hybrid device (e.g., to receive a message from the second hybrid device) for establishing secure communication links with the second hybrid device. If the first hybrid device 102 does not detect another hybrid device within the predetermined connect time interval (e.g., if the button 120 on the second hybrid device 110 is not pushed before the "connect" timer elapses), the first hybrid device 102 can terminate the session and can determine that secure communication links should not be established with another hybrid device.

In some embodiments, after the button 118 on the first hybrid device 102 is activated, the first hybrid device 102 can transmit a control message via each of its network interfaces 104, 106, and 108 to detect another communication device. For example, after the button 118 on the first hybrid device 102 is pushed, the first hybrid device 102 (e.g., the communication unit 103) can transmit a WLAN control message, a PLC control message, and an Ethernet control message from the WLAN interface 104, the PLC interface 106, and the Ethernet interface 108 respectively to indicate availability to establish a secure communication link with a suitable network device. In some embodiments, each of the network interfaces 104, 106, and 108 may also be associated with their respective "connect" timers. Each of the network interfaces 104, 106, and 108 may wait for a different (or the same) amount of time to detect another communication device with which to establish a secure communication link.

At stage B, the button 120 associated with the second hybrid device 110 is activated to establish one or more secure communication links with the first hybrid device 102. As described above with reference to the first hybrid device 102 in stage A, in some embodiments, after the button 120 on the second hybrid device 110 is pushed, the second hybrid device 110 may broadcast a control message (e.g., a probe message) via some or all of its network interfaces 112, 114, and 116 to indicate that it is ready to establish one or more secure communication links with the first hybrid device 102.

At stage C, the first hybrid device 102 detects the second hybrid device 110 and initiates operations for establishing one or more secure communication links with the second hybrid device via all of the network interfaces 104, 106, and 108. If the button 120 on the second hybrid device 110 is pushed within the predetermined connect time interval and if the first hybrid device 102 detects the probe message (or another suitable control message) transmitted by the second hybrid device 110 within the predetermined connect time interval, the first hybrid device 102 can initiate operations for establishing secure communication links with the second hybrid device 110 via all its network interfaces 104, 106, and 108. With reference to Figure 1, after the first hybrid device 102 detects the second hybrid device 110 and determines to establish secure communication links with the second hybrid device 110, the first hybrid device 102 can notify a WLAN module (not shown), a PLC module (not shown), and an Ethernet module (not shown) to initiate connection procedures for respectively establishing a secure WLAN communication link 122, a secure PLC link 124, and a secure Ethernet communication link 126 with the second hybrid device 110. It is noted that the WLAN module, the PLC module, and the Ethernet module can be part of the communication unit 103 or another connection establishment unit of the first hybrid device 102. The WLAN module of the first hybrid device 102 can execute WLAN connection procedures (e.g., WPS connection procedures) to attempt to establish the secure WLAN communication link 122 with the second hybrid device 110. Likewise, the PLC module of the first hybrid device 102 can execute PLC connection procedures (e.g., HomePlug AV connection procedures) to attempt to establish the secure PLC link 124 with the second hybrid device 110. The Ethernet module of the first hybrid device 102 can execute Ethernet connection procedures to attempt to establish the secure Ethernet communication link 126 with the second hybrid device 110. It should be noted that the WLAN module, the PLC module, and the Ethernet module may independently execute their respective connection procedures to attempt to establish the secure WLAN communication link 122, the secure PLC link 124, and the secure Ethernet communication link 126 respectively with the second hybrid device 110.

It is noted that the stages A - C depicted in Figure 1 may not be sequential and in some embodiments, only a subset of the stages depicted in Figure 1 may be executed. In one example, the button associated with only one of the hybrid devices may be activated (e.g., a one-button connection establishment procedure). For example, the first hybrid device 102 may detect the second hybrid device 110 and may establish the secure communication links 122, 124, and 126 with the second hybrid device 110 after only the button 118 associated with the first hybrid device 102 is activated (or the button 120 associated with the first hybrid device 110 is activated). In some embodiments, prior to establishing the secure communication links 122, 124, and 126, the hybrid devices 102 and 110 may notify each other of their respective network interfaces. The hybrid devices 102 and 110 can jointly determine whether the secure communication links should be established via some/all of their network interfaces.

It should be understood that although Figure 1 depicts the first hybrid device 102 and the second hybrid device 110 comprising physical buttons 118 and 120 respectively for initiating secure communication link establishment, embodiments are not so limited. In other embodiments, the first hybrid device 102 and the second hybrid device 110 may be associated with virtual buttons. The hybrid devices 102 and 110 may each present a virtual button on their respective display units. The user may click on the virtual buttons presented by the hybrid devices 102 and 110 to initiate establishment of one or more secure communication links between the hybrid devices 102 and 110.

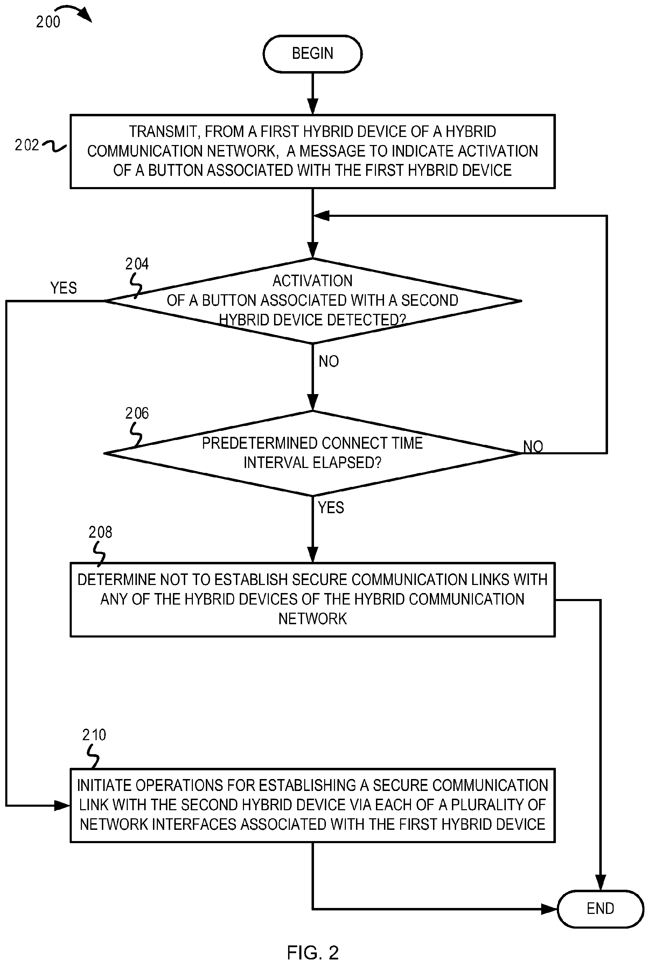

**Figure 2** is a flow diagram ("flow") 200 illustrating example operations of a hybrid device using a push-button initiated secure connection establishment procedure with another hybrid device. The flow 200 begins at block 202.

At block 202, a first hybrid device of a hybrid communication network transmits a message to indicate activation of a button associated with the first hybrid device. With reference to the example of Figure 1, a user can press the button 118 (e.g., a virtual button or a physical button) associated with the first hybrid device 102. The communication unit 103 of Figure 1 can transmit a message (e.g., a broadcast notification message, a probe message, etc.) to indicate to other hybrid devices 110 of the hybrid communication network 100 that the button 118 associated with the first hybrid device 102 was activated and that the first hybrid device 102 can establish one or more secure communication links with other hybrid devices. In some embodiments, non-hybrid devices ("legacy network devices") with a single network interface may also receive the message indicating that the button 118 associated with the first hybrid device 102 was activated. In some embodiments, after the button 118 associated with the first hybrid device 102 is activated, the communication unit 103 can start a "connect" timer and can wait for a predetermined connect time interval to detect another hybrid device with which to establish one or more secure communication links. The flow continues at block 204.

At block 204, it is determined whether activation of a button associated with a second hybrid device was detected. For example, the communication unit 103 can determine whether a broadcast notification message (or another suitable control message) was received from another hybrid device (e.g., the second hybrid device 110) of the hybrid communication network 100 indicating that a button 120 associated with the second hybrid device 110 was activated. If it is determined that the button 120 associated with a second hybrid device 110 was activated, the flow continues at block 210. Otherwise, the flow continues at block 206.

At block 210, operations for establishing a secure communication link with the second hybrid device are initiated via each of a plurality of network interfaces associated with the first hybrid device. The flow 200 moves from block 204 to block 210 after the first hybrid device 102 determines that the button 120 associated with the second hybrid device 110 was activated within the predetermined connect time interval. As discussed above in Figure 1, after the buttons 118 and 120 respectively associated with the first hybrid device 102 and the second hybrid device 110 are activated, the communication unit 103 (and the communication unit 111) can initiate operations for establishing secure communication links with the second hybrid device 110 via the WLAN interface 104, the PLC interface 106, and the Ethernet interface 108 of the first hybrid device 102. From block 210, the flow ends.

At block 206, it is determined whether the predetermined connect time interval has elapsed. The flow 200 moves from block 204 to block 206, if the first hybrid device 102 does not detect activation of a button associated with another hybrid device. As described above with reference to Figure 1, the first hybrid device 102 can wait for the predetermined connect time interval to detect another hybrid device with which to establish one or more secure communication links. If it is determined that the predetermined connect time interval has elapsed, the flow continues at block 208. Otherwise, the flow continues loops back to block 204, where the first hybrid device 102 continues to check whether a button associated with another hybrid device of the hybrid communication network 100 was activated.

At block 208, the first hybrid device determines not to establish secure communication links with any of the hybrid devices of the hybrid communication network. The flow 200 moves from block 206 to block 208 if the first hybrid device 102 determines that the button associated with none of the other hybrid devices of the hybrid communication network 100 was activated during the predetermined connect time interval. In some embodiments, if the first hybrid device 102 does not detect another hybrid device within the predetermined connect time interval, the first hybrid device 102 (e.g., the communication unit 103) can terminate the communication session. The first hybrid device 102 can determine that the operations for establishing secure communication links should not be executed with any hybrid devices of the hybrid communication network 100. From block 208, the flow ends.

It should also be understood that although Figures 1 - 2 describe operations for establishing secure communication links between two hybrid devices 102 and 110, embodiments are not so limited. In other embodiments, the operations described above can be employed to establish a secure communication link between a hybrid device and a non-hybrid device (e.g., a legacy communication device with a single network interface that connects the legacy communication device to a single communication network). Furthermore, in some embodiments, the first hybrid device 102 and the second hybrid device 110 may comprise a different number of network interfaces and/or may connect to different communication networks. For example, the first hybrid device may comprise a PLC interface and an Ethernet interface; while the second hybrid device may comprise a PLC interface and a WLAN interface. After the buttons on the first and the second hybrid devices are activated, each of the hybrid devices can initiate operations to establish secure communication links via their respective interfaces. Thus, the first hybrid device can attempt to establish communication links via its PLC interface and its Ethernet interface. The second hybrid device can attempt to establish communication links via its PLC interface and its WLAN interface. Because the first and the second hybrid devices only have a PLC interface in common, they might be able to establish a secure PLC link. However, because the second hybrid device does not comprise an Ethernet interface and the first hybrid device does not comprise a WLAN interface, operations for establishing a secure Ethernet communication link and a secure WLAN communication link may be unsuccessful. In other embodiments however, the second hybrid device may notify the first hybrid device (and/or the first hybrid device may notify the second hybrid device) of the available network interfaces.

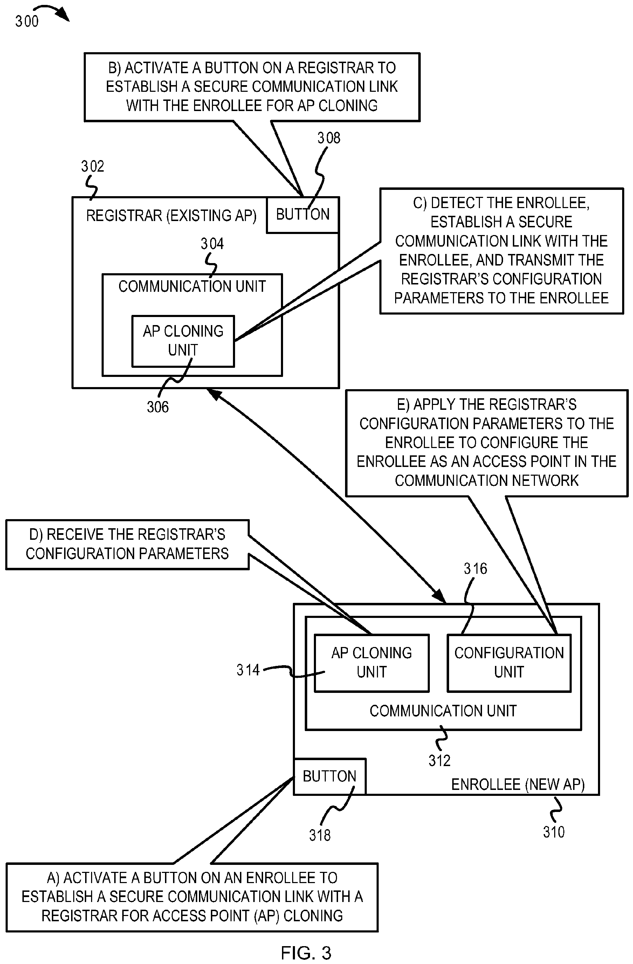

In some embodiments, as will be described below in **Figures 3 - 7**, the two devices that connect to each other (using the push-button initiated secure connection establishment procedure described above in Figures 1 - 2) may be access points. For example, a new access point (also referred to as an AP cloning client or "enrollee") that is to be added to an existing communication network may attempt to connect to an existing access point (also referred to as an AP cloning server or a "registrar") of the communication network. As another example, the enrollee may be a range extender (or a wireless router) that is to be added to an existing communication network; while the registrar may be an existing access point. As will be further described below, buttons associated with the enrollee and the registrar can be activated to copy the configuration parameters of the registrar to the enrollee.

**Figure 3** is a conceptual diagram including an example push-button initiated AP cloning procedure in a communication network 300. The communication network 300 comprises a registrar 302 (e.g., an existing access point of the communication network 300) and an enrollee 310 (e.g., a new access point to be added to the communication network 300). In some embodiments as depicted in Figure 3, the registrar 302 comprises a communication unit 304. The communication unit 304 comprises an AP cloning unit 306. The registrar 302 is associated with a button 308 (e.g., a physical button or a virtual button). The enrollee 310 also comprises a communication unit 312. The communication unit 312 comprises an AP cloning unit 314 and a configuration unit 316. The enrollee 310 is also associated with a button 318 (e.g., a physical button or a virtual button). In some embodiments, in lieu of a button, the registrar 308 and/or the enrollee 310 can comprise another suitable triggering device, such as a lever, a knob, a switch, etc. As will be further discussed below in stages A - E, the enrollee 310 (e.g., the new access point) can be configured with the same configuration parameters as the registrar 302 (e.g., the existing access point) to enable the enrollee 310 to perform the same operations as the registrar 302 in the communication network 300. In some embodiments, the push-button initiated secure connection establishment procedure described in Figures 1 - 2 can be employed to establish a secure communication link between the enrollee 310 and the registrar 302 and to add the enrollee 310 to the existing communication network 300. The operations for configuring the enrollee 310 using the same configuration parameters as the registrar 302 and for adding the enrollee 310 to the existing communication network 300 are herein referred to as "AP cloning" operations.

At stage A, a user activates the button 318 associated with the enrollee 310 to establish a secure communication link with the registrar 302 for AP cloning.

At stage B, the user activates the button 308 associated with the registrar 302 to establish a secure communication link with the enrollee 310 for AP cloning. In some embodiments, the enrollee 310 that is to be added to the communication network 300 can be a legacy access point that implements predefined/known communication protocols (e.g., WPS connection protocols) or that implements communication protocols that are different from those implemented by the registrar 302 (e.g., the existing access point). In this embodiment, to clone the enrollee 310 (i.e., the legacy access point), the enrollee 310 can first operate as a WLAN client device and connect to the registrar 302 (e.g., using the WPS connection protocols). For example, the enrollee 310 configured in a client operating mode can connect to the registrar 302 using the push-button initiated secure connection establishment procedure described above with reference to Figures 1 - 2. In some embodiments, after the button 318 on the enrollee 310 and the button 308 on the registrar 302 are activated (at stages A and B), the enrollee 310 can switch to a client operating mode and can connect to the registrar 302 (that is configured in an access point operating mode or a master operating mode).

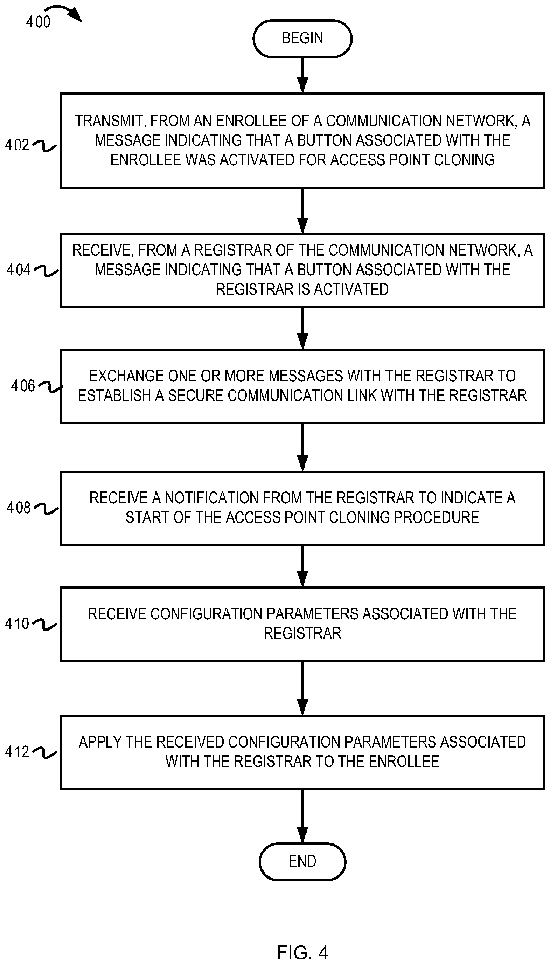

At stage C, the AP cloning unit 306 of the registrar 302 detects the enrollee 310, establishes a secure communication link with the enrollee 310, and transmits the registrar's configuration parameters to the enrollee 310. As will further be described with reference to Figures 4 - 7, the enrollee 310 and the registrar 302 can exchange a plurality of messages to establish the secure communication link. After the secure communication link is established, the AP cloning unit 306 can transmit the registrar's configuration parameters to the enrollee 310.

At stage D, the AP cloning unit 314 of the enrollee 310 receives the configuration parameters associated with the registrar 302.

At stage E, the configuration unit 316 of the enrollee 310 applies the registrar's configuration parameters to the enrollee 310 to configure the enrollee 310 as an access point in the communication network 300. In some embodiments, if the enrollee 310 received the registrar's configuration parameters while the enrollee 310 was configured in the client operating mode, the enrollee 310 can switch from the client operating mode to the access point operating mode after the enrollee 310 receives the registrar's configuration parameters (at stage D). The configuration unit 316 can then apply the received configuration parameters to configure the enrollee 310 in accordance with the registrar 302 (i.e., to clone the new access point). Once the enrollee 310 is configured using the same configuration parameters as the registrar 302, the enrollee 310 is deemed to be part of the communication network 300. In other embodiments, however, both the registrar 302 and the enrollee 310 can implement an AP parameter cloning protocol for AP cloning in the communication network. In this embodiment, using the AP parameter cloning protocol, the enrollee 310 may determine and obtain the configuration parameters of the registrar 302 without switching to the client operating mode, as will be further described below with reference to Figures 4 - 7.

It is noted that the stages A - E depicted in Figure 3 may not be sequential and in some embodiments, only a subset of the stages depicted in Figure 3 may be executed. In one example, the AP parameter cloning protocol may be executed in response to only the button 318 associated with the enrollee 310 being activated (e.g., stage A may be executed but stage B may not be executed). As another example, the button 308 associated with the registrar 302 may be activated before the button 318 associated with the enrollee 310 is activated (e.g., stage B may be executed before stage A).

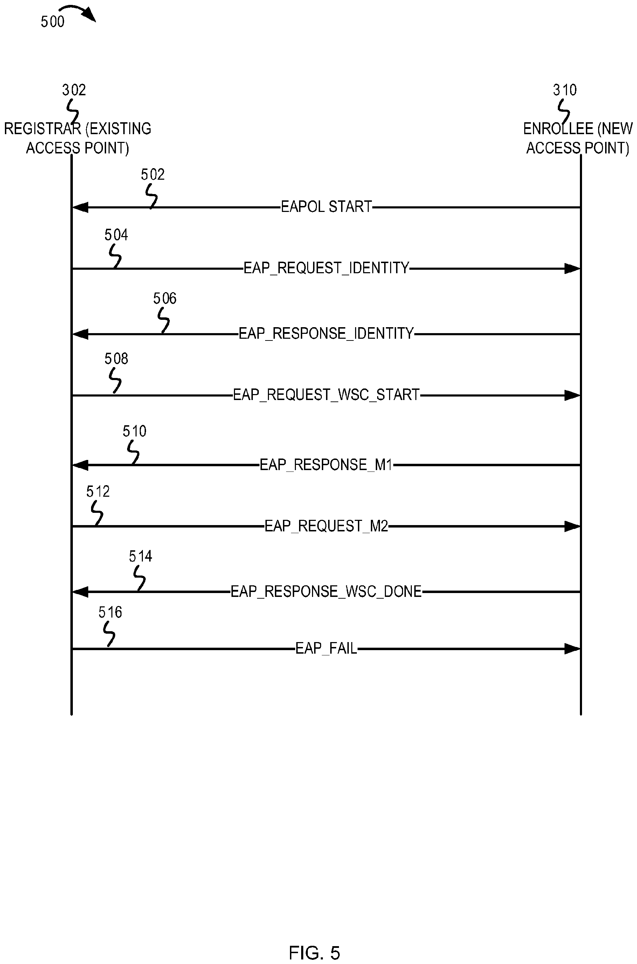

**Figure 4** is a flow diagram 400 illustrating example operations for configuring an enrollee in accordance with a registrar of a communication network using a push-button initiated AP cloning procedure. The operations of Figure 4 will be described in conjunction with a sequence diagram 500 of **Figure 5****.** The sequence diagram 500 illustrates example messages that are exchanged between the registrar and the enrollee during the push-button initiated AP cloning procedure. Referring to Figure 4, the flow 400 begins at block 402.

At block 402, an enrollee of a communication network transmits a message indicating that a button associated with the enrollee was activated for AP cloning. With reference to the example of Figure 3, the enrollee 310 can be a new access point or a range extender that is to be added to a communication network 300 that comprises an existing access point 302 (also known as a registrar). As will be further described below, the enrollee 310 can be configured in accordance with the registrar's configuration parameters to add the enrollee 310 to the communication network 300. With reference to the example of Figure 3, a user can press the button 318 (e.g., a virtual button or a physical button) associated with the enrollee 310. The enrollee 310 (e.g., the AP cloning unit 314) can transmit a message (e.g., a broadcast notification message, a probe message, etc.) to indicate to the registrar 302 (i.e., the existing access point) that the button 318 associated with the enrollee 310 was activated and that the enrollee 310 is ready to execute the AP cloning procedure with the registrar 302 of the communication network 300. In some embodiments, after the button 318 associated with the enrollee 310 (e.g., the new access point or a range extender or another suitable enrollee) is activated, the AP cloning unit 314 can start a "connect" timer and can wait for a predetermined connect time interval to detect a registrar 302 with which to establish a secure communication link and execute the AP cloning procedure. The flow continues at block 404.

At block 404, the enrollee receives a message indicating that a button associated with a registrar of the communication network is activated. For example, the AP cloning unit 314 can receive a broadcast notification message (or a probe message or another suitable control message) from the registrar 302 (e.g., the existing access point) of the communication network 300. In response to receiving the broadcast notification message, the enrollee 310 can determine that the button 308 associated with the registrar 302 was activated and that the registrar 302 is ready to execute the AP cloning procedure with the enrollee 310. The flow continues at block 406.

At block 406, one or more messages are exchanged with the registrar to establish a secure communication link with the registrar. With reference to the example of Figure 3, the communication unit 312 of the enrollee 310 can exchange one or more handshake messages with the communication unit 304 of the registrar 302 to establish the secure communication link between the registrar 302 and the enrollee 310. With reference to the example sequence diagram 500 of Figure 5, after the button 318 on the enrollee 310 and the button 308 on the registrar 302 are activated to initiate the AP cloning procedure, the enrollee 310 (e.g., the AP cloning unit 314) can transmit a probe message 502 (e.g., an EAPOL_START message) to the registrar 302. In response, the registrar 302 (e.g., the AP cloning unit 306) can transmit an identity request message 504 (e.g., an EAP_REQUEST_IDENTITY message) to query the enrollee 310 and to prompt the enrollee 310 to identify itself to the registrar 302. Next, the enrollee 310 can transmit an identity response message 506 (e.g., an EAP_RESPONSE_IDENTITY message) to the registrar 302. Referring back to Figure 4, the flow continues at block 408.

At block 408, a notification is received from the registrar to indicate a start of the AP cloning procedure. For example, the AP cloning unit 314 can receive a notification from the registrar 302 indicating that the communication link was successfully established with the enrollee 310 and that the AP cloning procedure will begin. With reference to Figure 5, the registrar 302 (e.g., the AP cloning unit 306) can transmit a message 508 (EAP_REQUEST_WSC_START message) to the enrollee 310 to indicate that the AP cloning procedure has started and that the registrar's configuration parameters will be transmitted to the enrollee 310. In response, the enrollee 310 can transmit an acknowledgement message 510 (e.g., an EAP_RESPONSE_M1 message) and can include the enrollee's configuration settings in the acknowledgement message 510. It is noted that in other embodiments, the enrollee 310 may not include its configuration settings in the acknowledgement message 510. In other embodiments, the enrollee 310 may transmit two separate messages - a first message to acknowledge receipt of the start of the AP cloning procedure and a second message comprising the enrollee's configuration settings. Referring back to Figure 4, the flow continues at block 410.

At block 410, the enrollee receives the configuration parameters associated with the registrar. For example, the AP cloning unit 314 can receive the configuration parameters associated with the registrar 302. Referring to Figure 5, after the enrollee 310 transmits the acknowledgement message 510 to the registrar 302, the registrar 302 can transmit its configuration settings in a message 512 (e.g., an EAP_REQUEST_M2 message) to the enrollee 310. Referring back to Figure 4, the flow continues at block 412.

At block 412, the configuration parameters received from the registrar are applied to the enrollee. With reference to the example of Figure 3, the configuration unit 316 can apply the registrar's configuration parameters (received at block 410) to the enrollee 310 to configure the enrollee 310 in accordance with the registrar 302. Furthermore, with reference to the example of Figure 5, the enrollee 310 can also transmit a status message 514 (e.g., an EAP_RESPONSE_WSC_DONE message) to the registrar 302 to indicate that the AP cloning procedure was successful, that the enrollee 310 received the registrar's configuration parameters, and that there were no timeouts or failures during the AP cloning procedure. The registrar 302 can then transmit a session termination message 516 (e.g., an EAP FAIL message) to the enrollee 310 to indicate the end of the AP cloning procedure. It is noted that if the enrollee 310 and the registrar 302 are access points, then after the new access point 310 receives and applies the configuration parameters associated with the existing access point 302, the new access point 310 can behave like the existing access point 302 in the communication network 300. From block 412, the flow ends.

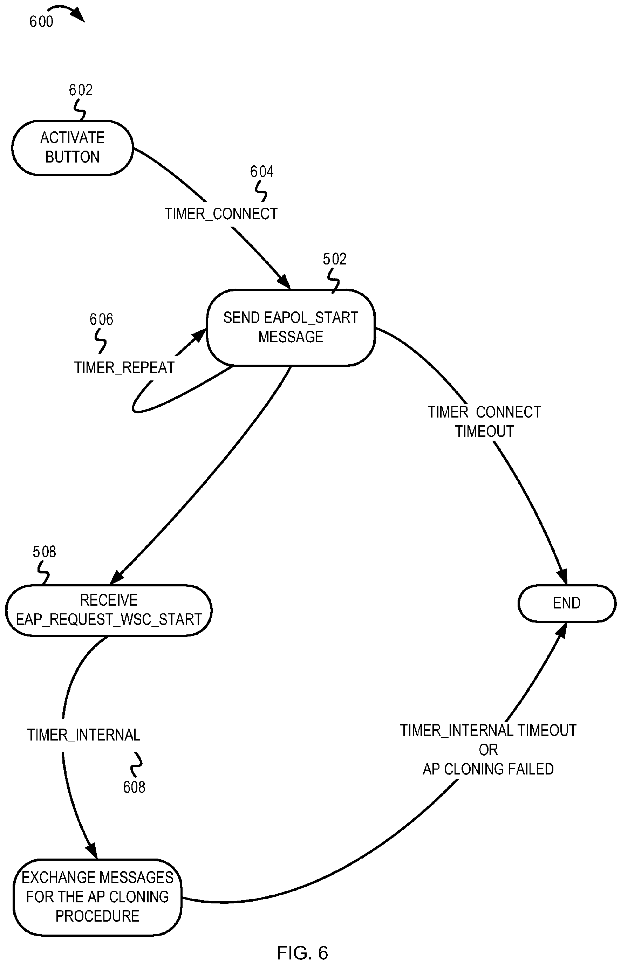

**Figure 6** is a state diagram 600 illustrating example operations executed by the enrollee 310 during the push-button initiated AP cloning procedure. At state 602, the button 318 associated with the enrollee 310 (also referred to as a new access point, a range extender, or an AP cloning client) is activated and the AP cloning procedure is initiated. As described above, the enrollee 310 transmits the EAPOL_START message 502 and starts a connect timer (Timer_Connect) 604. The Timer_Connect value (e.g., 120 seconds in one embodiment) can indicate how long the enrollee 310 should wait to receive a response from the registrar 302 before retransmitting the EAPOL_START message 502. If the connect timer 604 expires before the enrollee 310 receives a response from the registrar 302, the enrollee 310 can retransmit the EAPOL_START message 502 (e.g., to the registrar 302) and can start a repeat timer 606 (Timer_Repeat). The value of the repeat timer 606 can indicate how often the enrollee 310 should retransmit the EAPOL_START message 502. In one example, the value of the repeat timer 606 can be 1 second. In some embodiments, if the connect timer 604 and/or the repeat timer 606 expire and the enrollee 310 has not received a response from the registrar 302, the enrollee 310 may declare a timeout, terminate the session, and determine that AP cloning procedure was unsuccessful. After the registrar 302 responds to the EAPOL_START message 502 (e.g., after the enrollee 310 receives the EAP _REQUEST IDENTITY message 504 of Figure 5), the enrollee 310 and the registrar 302 can exchange the appropriate messages outlined above with reference to Figures 4 - 5. In some embodiments, after the enrollee 310 receives a notification that the AP cloning procedure has started (e.g., after the enrollee 310 receives the EAP_RESPONSE_WSC_START message 508), the enrollee 310 can start an internal timer 608 (Timer_Internal). The enrollee's internal timer 608 can indicate how long the enrollee 310 should wait for the AP cloning procedure to complete once the AP cloning procedure has started. In one example, the value of the enrollee's internal timer 608 can be 15 seconds. Thus, if the AP cloning procedure is not completed within 15 seconds after the EAP_RESPONSE_WSC_START 508 message is received, the enrollee 310 may declare a timeout, determine that the AP cloning procedure was unsuccessful, and terminate the session with the registrar 302. It should be understood that in some implementations the values of all the timers are configurable.

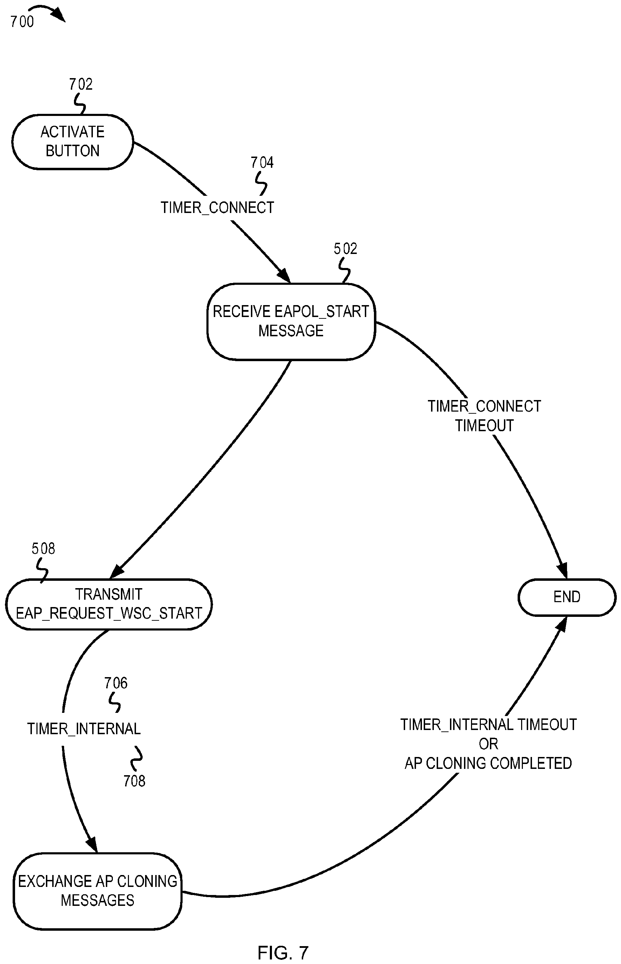

**Figure 7** is a state diagram 700 illustrating example operations executed by the registrar 302 during the push-button initiated AP cloning procedure. At state 702, the button 308 associated with the registrar 302 (also referred to as an existing access point or an AP cloning server) is activated and the AP cloning procedure begins. After the button 308 on the registrar 302 is activated, the registrar 302 can start a connect timer 704 (referred to as Timer Connect). The value of the registrar's connect timer 704 (e.g., 120 seconds, in one embodiment) can indicate how long the registrar 302 should wait to receive a probe message (e.g., an EAPOL_START message 502) from the enrollee 310. If the registrar's connect timer 704 expires and the registrar 302 has not received the EAPOL_START message 502 from the enrollee 310, the registrar 302 may declare a timeout, terminate the session, and determine that AP cloning procedure was unsuccessful. If the registrar 302 receives the EAPOL_START message 502 before the registrar's connect timer 704 expires, the registrar 302 can respond to the EAPOL_START message 502 by transmitting the EAP_REQUEST_IDENTITY 504 message to the enrollee 310. The enrollee 310 and the registrar 302 can then exchange the appropriate messages outlined above with reference to Figures 4 - 5. In some embodiments, after the registrar 302 transmits a notification that the AP cloning procedure has started (e.g., after the registrar 302 transmits the EAP_RESPONSE_WSC_START message 508), the registrar 302 can start an internal timer 706 (Timer_Internal). The registrar's internal timer 706 can indicate how long the registrar 302 should wait for the AP cloning procedure to complete. In one example, the value of the registrar's internal timer 706 can be 15 seconds. Thus, if the AP cloning procedure is not completed within 15 seconds after the EAP_RESPONSE_WSC_START message 508 is transmitted, the registrar 302 may declare a timeout, determine that the AP cloning procedure was unsuccessful, and terminate the session with the enrollee 310. It should be understood that in some implementations the values of all the timers are configurable.

In some embodiments, the value of the registrar's connect timer 704 and internal timer 706 may be the same as the value of the enrollee's connect timer 604 and internal timer 608 respectively to provide a uniform user-experience across both devices. In some embodiments, the values for the registrar's internal timer 608 and the enrollee's internal timer 706 may be determined by taking into consideration the maximum time that is permitted for transmitting each message, the maximum time that is permitted for receiving a corresponding response message, network delays, and other such factors.

It should be understood that Figures 1 - 7 and the operations described herein are examples meant to aid in understanding embodiments and should not be used to limit embodiments or limit scope of the claims. Embodiments may perform additional operations, fewer operations, operations in a different order, operations in parallel, and some operations differently. For example, although examples describe that the AP cloning procedure is initiated after the button 308 associated with the registrar 302 and the button 318 associated with the enrollee 310 are activated, embodiments are not so limited. In other embodiments, a one-button AP cloning procedure can be implemented. In this embodiment, only the button 318 associated with the enrollee 310 may be activated to initiate the AP cloning procedure. After the button 318 associated with the enrollee 310 is pushed, the enrollee 310 can search for and identify a registrar 302 (e.g., an existing access point) in the communication network 300. The enrollee 310 can connect to the identified registrar 302, determine configuration parameters (e.g., network parameters, security parameters) associated with the identified registrar 302, and apply the configuration parameters to itself, as described above in Figures 3 - 7.

It should also be understood that although examples refer to WLAN parameters being cloned from the existing WLAN access point 302 to the new WLAN access point 310, embodiments are not so limited. In other embodiments, parameters may be cloned from the existing access point 302 to the new access point 310 across all available network interfaces. For example, the existing access point 302 and the new access point 310 may each be hybrid access points. In this example, if the existing access point 302 and the new access point 310 each comprise a WLAN interface and a PLC interface, WLAN parameters and PLC parameters may be cloned from the existing access point 302 to the new access point 310. In some embodiments, the new access point 310 can indicate one of more of its the network interfaces that are to be cloned (e.g., the new access point 310 may request PLC parameters associated with the existing access point 302 and may not request WLAN parameters associated with the existing access point 302).

In some embodiments, the registrar 302 can provide one or more notifications (e.g., an audio/visual notification) to the user to indicate the progress of the AP cloning procedure. For example, the registrar 302 can provide an "in progress" notification to indicate that the button 308 associated with the registrar 302 was activated and that the registrar 302 is waiting for a probe message (e.g., the EAPOL_START message 502) from the enrollee 310. As another example, the registrar 302 can provide a "success" notification to indicate that the AP cloning procedure was successfully executed with the enrollee 310. As another example, the registrar 302 can provide a "timeout" notification to indicate that the AP cloning procedure could not be completed within a predetermined time interval. As another example, the registrar 302 may provide a "session overlap" message to indicate that the registrar 302 received protocol messages (e.g., EAPOL_START messages) from two different enrollees. Likewise, the enrollee 310 can also provide one or more notifications (e.g., an audio/visual notification) to the user to indicate the progress of the AP cloning procedure. For example, the enrollee 310 can provide an "in progress" notification to indicate that the button 318 associated with the enrollee 310 was activated and that the enrollee 310 is waiting for a response message (e.g., the EAP_REQUEST_IDENTITY message 504) from the registrar 302. As another example, the enrollee 310 can provide a "success" notification to indicate that the AP cloning procedure was successfully executed, that the configuration parameters were received from the registrar 302, and that the received configuration parameters were successfully applied to the enrollee 310. As another example, the enrollee 310 may provide a "timeout" notification to indicate that the AP cloning procedure could not be completed because a response message was not received from the registrar 302. As another example, the enrollee 310 may provide a "session overlap" message to indicate that the enrollee 310 received protocol messages (e.g., EAP REQUEST IDENTITY messages) from two different registrars. In some embodiments, if the session overlap notification is received, the user may reconfigure the WLAN network (or the PLC network or another suitable network) and restart the AP cloning procedure. Additionally, in some embodiments, the registrar 302 and/or the enrollee 310 can provide a message indicating that the AP cloning procedure was unsuccessful, identifying why the AP cloning procedure was unsuccessful, and how the errors can be rectified. In some embodiments, after the enrollee 310 applies the registrar's configuration parameters, the enrollee 310 can display a message to the user indicating that the enrollee 310 has been successfully added to the communication network 300.

In some embodiments, the registrar 302 and the enrollee 310 can each be WLAN access points. In this embodiment, the new WLAN access point 310 can receive one or more configuration parameters from the existing WLAN access point 302 to add the new WLAN access point 310 to the WLAN 300, as described above with reference to Figures 3 - 7. In this embodiment, the existing WLAN access point 302 can transmit its configuration parameters to the new WLAN access point 310 in a "config" field of a suitable message (e.g., the EAP REQUEST M2" message 512 of Figure 5). In some embodiments, the "config" field can be encrypted for secure transmission of the configuration parameters from the existing WLAN access point 302 to the new WLAN access point 310. In some embodiments, the configuration parameters can include AP setup parameters, security parameters, radio settings, wireless settings, other vendor specific parameters, etc. The AP setup parameters can include a service set identifier (SSID) (or a basic service set identifier (BSSID)) and a parameter that indicates whether the SSID is broadcast in the beacon. The security parameters can indicate what type of security protocol is implemented by the existing WLAN access point 302. For example for the 802.11 security protocol, the existing WLAN access point 302 can indicate whether open security (i.e., little to no security), wired equivalent privacy (WEP), Wi-Fi protected access using a pre-shared key (WPA-PSK), WPA2-PSK, WPA/WPA2-PSK, 802.1X WPA-Enterprise, WPA2-Enterprise, WPA/WPA2-Enterprise, WAPI-PSK, WAPI-Certificate, WAPI-Both, etc. are supported. The WEP security settings can indicate the basic authentication mode (e.g., none, share), a key length (e.g., 128 bit, 64 bit, 152 bit, etc.), an index of a current network key, a network key value, etc. The WPA-PSK, WPA2-PSK, WPA/WPA2-PSK settings can indicate a WPA pre-shared key, a WPA encryption type (e.g., TKIP, AES, TKIP-AES, etc.). The 802.1X settings can indicate a re-key period, an authentication server address, port, and secret. The WPA-Enterprise, WPA2-Enterprise, WPA/WPA2-Enterprise settings can indicate whether robust security network (RSN) preauthorization is supported, a re-authentication period, and an authentication server address, port, and secret. The WLAN Authentication and Privacy Infrastructure (WAPI) security settings can indicate one or more of a unicast rekey timeout, a unicast rekey packet, a multicast rekey timeout, a multicast rekey packet, a PSK type (e.g., ASCII, HEX, etc.), whether PSK pre-authorization is supported, a PSK passphrase, a certificate file, a certificate file type, a certificate status (e.g., does not exist, valid, invalid), authentication service unit IP address and port, etc. For asynchronous connection links (ACL), the existing WLAN access point 302 can provide a list of medium access control (MAC) addresses of corresponding communication devices that are allowed to associate with the existing WLAN access point 302 (and consequently with the new WLAN access point 310). As part of router security parameters, the existing WLAN access point 302 can provide information regarding whether MAC address filtering is supported, a list authorized devices (e.g., MAC addresses) with which a communication link can be established, a list restricted MAC addresses with which a communication link should not be established, etc. The radio settings can include the operation mode (e.g., 802.11a, 802.11b only, 802.11g, 802.11na20, 802.11na-40plus, 802.11na40minus, 802.11ng20, 802.11ng40plus, 802.11ng40minus, etc.), communication channel (e.g., auto, channels 1 - 13), transmission power, channel expansion mode (e.g., whether static or dynamic), whether aggregation is supported, aggregation frames, aggregation limit, a time-out value for connection establishment retry, transmitter and receiver chainmask values (e.g., enabled transmitter and receiver chains), and other suitable parameters. The wireless settings can indicate whether the existing WLAN access point 302 supports short guard interval (GI), Wi-Fi multimedia (WMM), high throughput (HT) communication, request-to-send/clear-to-send (RS/CTS) messages, fragmentation, advance intelligent quality of user experience(IQUE), etc. It is noted that the configuration parameters listed above are only examples. In some embodiments, the existing WLAN access point 302 can transmit only a subset of the aforementioned configuration parameters to the new WLAN access point 310. In other embodiments, the existing WLAN access point 302 can transmit other suitable configuration parameters to the new WLAN access point 310.

Lastly, in some embodiments, after the new WLAN access point 310 receives the WLAN configuration parameters associated with the existing WLAN access point 302, the new WLAN access point 310 can configure its security parameters in accordance with the AP parameters and security parameters (e.g., SSID, SSID broadcasting, security type, etc.) received from the existing WLAN access point 302. In some embodiments, the new WLAN access point 310 may request only a subset of all the configuration parameters associated with the existing WLAN access point 302. For example, the new WLAN access point 310 may request the AP setup parameters and the security parameters; but may not request the radio settings, wireless settings, and other vendor specific parameters. In some embodiments, the new WLAN access point 310 may receive all the configuration parameters associated with the existing WLAN access point 302. The new WLAN access point 310 may then process the received configuration parameters and determine whether to reconfigure itself in accordance with some/all/none of the received configuration parameters.

As will be appreciated by one skilled in the art, aspects of the present inventive subject matter may be embodied as a system, method, or computer program product. Accordingly, aspects of the present inventive subject matter may take the form of an entirely hardware embodiment, a software embodiment (including firmware, resident software, microcode, etc.) or an embodiment combining software and hardware aspects that may all generally be referred to herein as a "circuit," "module" or "system." Furthermore, aspects of the present inventive subject matter may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing.

Computer program code for carrying out operations for aspects of the present inventive subject matter may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present inventive subject matter are described with reference to flowchart illustrations and/or block diagrams of methods, apparatus (systems) and computer program products according to embodiments of the inventive subject matter. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

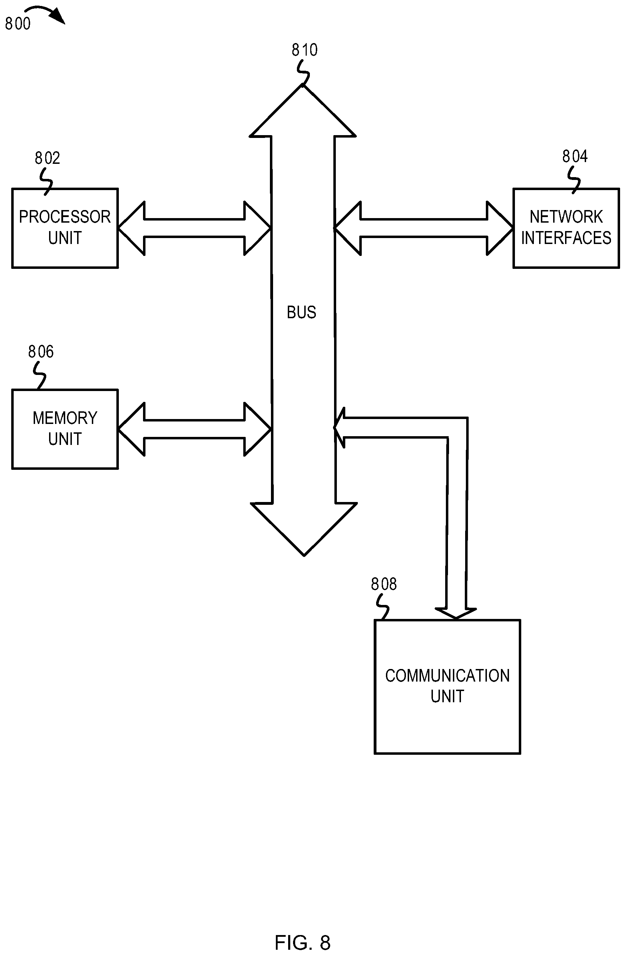

**Figure 8** is a block diagram of one embodiment of an electronic device 800 including a push-button initiated procedure for configuring and connecting network devices. In some embodiments, the electronic device 800 can be a laptop computer, a tablet computer, a mobile phone, a smart appliance, a gaming console, an access point, a desktop computer, or other suitable electronic device with hybrid communication capabilities. In other embodiments, the electronic device 800 can be a legacy or a hybrid access point. The electronic device 800 includes a processor unit 802 (possibly including multiple processors, multiple cores, multiple nodes, and/or implementing multi-threading, etc.). The electronic device 800 includes a memory unit 806. The memory unit 806 may be system memory (e.g., one or more of cache, SRAM, DRAM, zero capacitor RAM, Twin Transistor RAM, eDRAM, EDO RAM, DDR RAM, EEPROM, NRAM, RRAM, SONOS, PRAM, etc.) or any one or more of the above already described possible realizations of machine-readable media. The electronic device 800 also includes a bus 810 (e.g., PCI, ISA, PCI-Express, HyperTransport®, InfiniBand®, NuBus, AHB, AXI, etc.), and network interfaces 804 that include at least one of a wireless network interface (e.g., a WLAN interface, a Bluetooth® interface, a WiMAX interface, a ZigBee® interface, a Wireless USB interface, etc.) and a wired network interface (e.g., an Ethernet interface, etc.). In some embodiments, the electronic device 800 can comprise a plurality of network interfaces (e.g., a WLAN interface, a PLC interface, and an Ethernet interface) that connect the electronic device 800 to a corresponding communication network (e.g., a WLAN, a PLC network, and an Ethernet respectively).

The electronic device 800 also includes a communication unit 808. In some embodiments, if the electronic device 800 is a hybrid device, the communication unit 808 can execute a push-button initiated secure connection establishment procedure for connecting the electronic device 800 to another hybrid device via some/all of its network interfaces 804, as described above with reference to Figures 1 - 2. In another embodiment, if the electronic device 800 is an access point (e.g., a hybrid or legacy access point), the communication unit 808 can execute a push-button initiated AP cloning procedure, as described above with reference to Figures 3 - 7. Any one of these functionalities may be partially (or entirely) implemented in hardware and/or on the processor unit 802. For example, the functionality may be implemented with an application specific integrated circuit, in logic implemented in the processor unit 802, in a co-processor on a peripheral device or card, etc. Further, realizations may include fewer or additional components not illustrated in Figure 8 (e.g., video cards, audio cards, additional network interfaces, peripheral devices, etc.). For example, the communication unit 808 may comprise one or more additional processors that are distinct from the processor unit 802 coupled with the bus 810. The processor unit 802, the memory unit 806, and the network interfaces 804 are coupled to the bus 810. Although illustrated as being coupled to the bus 810, the memory unit 806 may be coupled to the processor unit 802.

While the embodiments are described with reference to various implementations and exploitations, it will be understood that these embodiments are illustrative and that the scope of the inventive subject matter is not limited to them. In general, a push button initiated procedure for connecting and configuring hybrid devices as described herein may be implemented with facilities consistent with any hardware system or hardware systems. Many variations, modifications, additions, and improvements are possible.

Plural instances may be provided for components, operations, or structures described herein as a single instance. Finally, boundaries between various components, operations, and data stores are somewhat arbitrary, and particular operations are illustrated in the context of specific illustrative configurations. Other allocations of functionality are envisioned and may fall within the scope of the inventive subject matter. In general, structures and functionality presented as separate components in the exemplary configurations may be implemented as a combined structure or component. Similarly, structures and functionality presented as a single component may be implemented as separate components. These and other variations, modifications, additions, and improvements may fall within the scope of the inventive subject matter.

## Claims

1. A method for network communication, the method comprising:
detecting that a first button (118) associated with a first hybrid device (102) of a hybrid communication network and a second button (120) associated with a second hybrid device (110) of the hybrid communication network were activated, wherein the first hybrid device includes a plurality of different network interfaces (104, 106, 108);
determining, at the first hybrid device (102), to establish a secure communication link with the second hybrid device (110) via at least a subset of the plurality of different network interfaces of the first hybrid device (102) in response to said detecting that the first button (118) and the second button (120) were activated;
wherein detecting that the first button (118) and the second button (120) were activated comprises determining whether a probe message was received from the second hybrid device (110) over a network interface of the subset of plurality of different network interfaces within a predetermined connect time interval specific to said network interface, which is different from other connect time intervals specific to other network interfaces of the subset of plurality of different network interfaces; and
initiating operations for establishing the secure communication link with the second hybrid device (110) via the at least the subset of the plurality of different network interfaces.

2. The method of claim 1, wherein in response to said detecting that the first button was activated, the method further comprises:
transmitting a probe message from the first hybrid device to indicate that the first button was activated and that the first hybrid device is available to establish a secure communication link with another network device of the hybrid communication network.

3. The method of claim 1, wherein said detecting that the second button was activated is in response to detecting a probe message transmitted by the second hybrid device.

4. The method of claim 1, further comprising:
establishing the secure communication link with the second hybrid device in response to determining that the probe message was received from the second hybrid device within the predetermined connect time interval; and
determining not to establish the secure communication link with the second hybrid device in response to determining that the probe message was not received from the second hybrid device within the predetermined connect time interval.

5. The method of claim 1, wherein said initiating the operations for establishing the secure communication link with the second hybrid device via at least the subset of the plurality of different network interfaces comprises:
initiating operations for establishing the secure communication link with the second hybrid device via two or more of a wireless local area network, WLAN, interface, a powerline communication, PLC, interface, and an Ethernet interface of the first hybrid device.

6. The method of claim 1, wherein said initiating operations for establishing the secure communication link with the second hybrid device via at least the subset of the plurality of different network interfaces comprises:
transmitting an indication of the plurality of different network interfaces of the first hybrid device from the first hybrid device to the second hybrid device;
receiving an indication of a plurality of different network interfaces of the second hybrid device from the second hybrid device; and
identifying the subset of the plurality of different network interfaces of the first hybrid device via which to establish the secure communication link with the second hybrid device based, at least in part, on the plurality of different network interfaces of the first hybrid device and the plurality of different network interfaces of the second hybrid device.

7. A first network device (800) comprising:
a processor (802);
a plurality of network interfaces (804) coupled with the processor (802); and
a communication unit (808) coupled with the processor (802) and with the plurality of different network interfaces (804), the communication unit operable to:
detect that a first button (118) associated with the first network device of a hybrid communication network and a second button (120) associated with a second network device of the hybrid communication network were activated;
determine to establish a secure communication link with the second network device via at least a subset of the plurality of different network interfaces in response to detecting that the first button (118) and the second button (120) were activated, wherein detecting that the first button (118) and the second button (120) were activated comprises determining whether a probe message was received from the second network device over a network interface of the subset of plurality of different network interfaces within a predetermined connect time interval specific to said network interface, which is different from other connect time intervals specific to other network interfaces of the subset of plurality of different network interfaces; and
initiate operations for establishing the secure communication link with the second network device via at least the subset of the plurality of different network interfaces.

8. A computer program comprising instructions for carrying out a method according to any one of claims 1 to 6 when run on a computer.

## Patentansprüche

1. Verfahren zur Netzwerkkommunikation, wobei das Verfahren umfasst:
Detektieren, dass eine erste Taste (118), die einer ersten Hybridvorrichtung (102) eines hybriden Kommunikationsnetzes zugeordnet ist, und eine zweite Taste (120), die einer zweiten Hybridvorrichtung (110) des hybriden Kommunikationsnetzes zugeordnet ist, aktiviert wurden, wobei die erste Hybridvorrichtung eine Vielzahl von verschiedenen Netzwerkschnittstellen (104, 106, 108) umfasst;
Bestimmen, an der ersten Hybridvorrichtung (102), eine sichere Kommunikationsverbindung mit der zweiten Hybridvorrichtung (110) herzustellen, über mindestens eine Teilmenge der Vielzahl von verschiedenen Netzwerkschnittstellen der ersten Hybridvorrichtung (102) in Reaktion auf das Detektieren, dass die erste Taste (118) und die zweite Taste (120) aktiviert wurden;
wobei das Detektieren, dass die erste Taste (118) und die zweite Taste (120) aktiviert wurden, das Bestimmen umfasst, ob eine Sondierungsnachricht von der zweiten Hybridvorrichtung (110) über eine Netzwerkschnittstelle der Teilmenge von mehreren verschiedenen Netzwerkschnittstellen innerhalb eines vorbestimmten Verbindungszeitintervalls, das für die Netzwerkschnittstelle spezifisch ist und sich von anderen Verbindungszeitintervallen unterscheidet, die für andere Netzwerkschnittstellen der Teilmenge von mehreren verschiedenen Netzwerkschnittstellen spezifisch sind, empfangen wurde; und
Initiieren von Operationen zum Aufbau der sicheren Kommunikationsverbindung mit dem zweiten Hybridvorrichtung (110) über mindestens die Teilmenge der Vielzahl unterschiedlicher Netzwerkschnittstellen.

2. Verfahren nach Anspruch 1, wobei als Reaktion auf das Detektieren, dass die erste Taste aktiviert wurde, das Verfahren ferner umfasst:
Senden einer Sondierungsnachricht von dem ersten Hybridvorrichtung, um anzuzeigen, dass die erste Taste aktiviert wurde und dass die erste Hybridvorrichtung verfügbar ist, um eine sichere Kommunikationsverbindung mit einem anderen Netzwerkgerät des Hybridkommunikationsnetzes herzustellen.

3. Verfahren nach Anspruch 1, wobei das Detektieren, dass die zweite Taste aktiviert wurde, als Reaktion auf das Detektieren einer von der zweiten Hybridvorrichtung gesendeten Sondierungsnachricht erfolgt.

4. Verfahren nach Anspruch 1, ferner umfassend:
Herstellen der sicheren Kommunikationsverbindung mit dem zweiten Hybridvorrichtung als Reaktion auf das Detektieren, dass die Sondierungsnachricht von dem zweiten Hybridvorrichtung innerhalb des vorbestimmten Verbindungszeitintervalls empfangen wurde; und
Bestimmen, dass die sichere Kommunikationsverbindung mit dem zweiten Hybridvorrichtung nicht hergestellt wird, wenn festgestellt wird, dass die Sondierungsnachricht von dem zweiten Hybridvorrichtung nicht innerhalb des vorbestimmten Verbindungszeitintervalls empfangen wurde.

5. Verfahren nach Anspruch 1, wobei das Initiieren der Operationen zum Herstellen der sicheren Kommunikationsverbindung mit der zweiten Hybridvorrichtung über mindestens die Teilmenge der Vielzahl von verschiedenen Netzwerkschnittstellen umfasst:
Einleiten von Operationen zum Aufbau der sicheren Kommunikationsverbindung mit der zweiten Hybridvorrichtung über zwei oder mehrere Schnittstellen einer drahtlosen lokalen Netzwerks-, WLAN-, und/oder einer Powerline-Kommunikations-, SPS-, und/oder einer Ethernet-Verbindung der ersten Hybridvorrichtung.

6. Verfahren nach Anspruch 1, wobei die Einleitung von Operationen zum Aufbau der sicheren Kommunikationsverbindung mit dem zweiten Hybridvorrichtung über mindestens die Teilmenge der Vielzahl von verschiedenen Netzwerkschnittstellen umfasst:
Übertragen einer Anzeige der Vielzahl unterschiedlicher Netzwerkschnittstellen der ersten Hybridvorrichtung von der ersten Hybridvorrichtung zu der zweiten Hybridvorrichtung;
Empfangen einer Anzeige einer Vielzahl von verschiedenen Netzwerkschnittstellen der zweiten Hybridvorrichtung von der zweiten Hybridvorrichtung; und
Identifizieren der Teilmenge der Vielzahl unterschiedlicher Netzwerkschnittstellen der ersten Hybridvorrichtung, über die die sichere Kommunikationsverbindung mit der zweiten Hybridvorrichtung hergestellt wird, zumindest teilweise auf der Grundlage der Vielzahl unterschiedlicher Netzwerkschnittstellen der ersten Hybridvorrichtung und der Vielzahl unterschiedlicher Netzwerkschnittstellen der zweiten Hybridvorrichtung.

7. Eine erste Netzwerkvorrichtung (800), umfassend:
einen Prozessor (802);
eine Vielzahl von Netzwerkschnittstellen (804), die mit dem Prozessor (802) gekoppelt sind; und
eine Kommunikationseinheit (808), die mit dem Prozessor (802) und mit der Vielzahl von verschiedenen Netzwerkschnittstellen (804) gekoppelt ist, wobei die Kommunikationseinheit betriebsbereit ist zum:
Detektieren, dass eine erste Taste (118), die dem ersten Netzwerkgerät eines hybriden Kommunikationsnetzes zugeordnet ist, und eine zweite Taste (120), die einer zweiten Netzwerkvorrichtung des hybriden Kommunikationsnetzes zugeordnet ist, aktiviert wurden;
Bestimmen, eine sichere Kommunikationsverbindung mit der zweiten Netzwerkvorrichtung herzustellen, über mindestens eine Teilmenge der Vielzahl von verschiedenen Netzwerkschnittstellen als Reaktion auf das Detektieren, dass die erste Taste (118) und die zweite Taste (120) aktiviert wurden, wobei das Detektieren, dass die erste Taste (118) und die zweite Taste (120) aktiviert wurden, das Bestimmen umfasst, ob eine Sondierungsnachricht von der zweiten Netzwerkvorrichtung über eine Netzwerkschnittstelle der Teilmenge von mehreren verschiedenen Netzwerkschnittstellen innerhalb eines vorbestimmten Verbindungszeitintervalls, das für die Netzwerkschnittstelle spezifisch ist und sich von anderen Verbindungszeitintervallen unterscheidet, die für andere Netzwerkschnittstellen der Teilmenge von mehreren verschiedenen Netzwerkschnittstellen spezifisch sind, empfangen wurde; und
Initiieren von Operationen zum Aufbau der sicheren Kommunikationsverbindung mit der zweiten Netzwerkvorrichtung über mindestens die Teilmenge der Vielzahl unterschiedlicher Netzwerkschnittstellen.

8. Computerprogramm mit Anweisungen zur Durchführung eines Verfahrens nach einem der Ansprüche 1 bis 6, wenn es auf einem Computer ausgeführt wird.

## Revendications

1. Procédé de communication de réseau, le procédé comprenant :
la détection qu'un premier bouton (118) associé à un premier dispositif hybride (102) d'un réseau de communication hybride et un deuxième bouton (120) associé à un deuxième dispositif hybride (110) du réseau de communication hybride ont été activés, dans lequel le premier dispositif hybride comprend une pluralité d'interfaces réseau différentes (104, 106, 108) ;
la détermination, au niveau du premier dispositif hybride (102), d'établir une liaison de communication sécurisée avec le deuxième dispositif hybride (110) par le biais d'au moins un sous-ensemble de la pluralité d'interfaces réseau différentes du premier dispositif hybride (102) en réponse à ladite détection que le premier bouton (118) et le deuxième bouton (120) ont été activés ;
dans lequel la détection que le premier bouton (118) et le deuxième bouton (120) ont été activés comprend le fait de déterminer si un message de sondage a été reçu à partir du deuxième dispositif hybride (110) sur une interface réseau du sous-ensemble de pluralité d'interfaces réseau différentes dans un intervalle de temps de connexion prédéterminé spécifique à ladite interface réseau, qui est différent d'autres intervalles de temps de connexion spécifiques à d'autres interfaces réseau du sous-ensemble de pluralité d'interfaces réseau différentes ; et
le lancement d'opérations pour établir la liaison de communication sécurisée avec le deuxième dispositif hybride (110) par le biais de l'au moins un sous-ensemble de la pluralité d'interfaces réseau différentes.

2. Procédé selon la revendication 1, dans lequel, en réponse à ladite détection que le premier bouton a été activé, le procédé comprend en outre :
la transmission d'un message de sondage à partir du premier dispositif hybride pour indiquer que le premier bouton a été activé et que le premier dispositif hybride est disponible pour établir une liaison de communication sécurisée avec un autre dispositif de réseau du réseau de communication hybride.

3. Procédé selon la revendication 1, dans lequel ladite détection que le deuxième bouton a été activé est en réponse à la détection d'un message de sondage transmis par le deuxième dispositif hybride.

4. Procédé selon la revendication 1, comprenant en outre :
l'établissement de la liaison de communication sécurisée avec le deuxième dispositif hybride en réponse à la détermination que le message de sondage a été reçu à partir du deuxième dispositif hybride dans l'intervalle de temps de connexion prédéterminé ; et
la détermination de ne pas établir la liaison de communication sécurisée avec le deuxième dispositif hybride en réponse à la détermination que le message de sondage n'a pas été reçu à partir du deuxième dispositif hybride dans l'intervalle de temps de connexion prédéterminé.

5. Procédé selon la revendication 1, dans lequel ledit lancement des opérations pour établir la liaison de communication sécurisée avec le deuxième dispositif hybride par le biais de l'au moins un sous-ensemble de la pluralité d'interfaces réseau différentes comprend :
le lancement d'opérations pour établir la liaison de communication sécurisée avec le deuxième dispositif hybride par le biais de deux ou plus parmi une interface de réseau local sans fil, WLAN, une interface de communication par courants porteurs, PLC, et une interface Ethernet du premier dispositif hybride.

6. Procédé selon la revendication 1, dans lequel ledit lancement d'opérations pour établir la liaison de communication sécurisée avec le deuxième dispositif hybride par le biais de l'au moins un sous-ensemble de la pluralité d'interfaces réseau différentes comprend :
la transmission d'une indication de la pluralité d'interfaces réseau différentes du premier dispositif hybride du premier dispositif hybride au deuxième dispositif hybride ;
la réception d'une indication d'une pluralité d'interfaces réseau différentes du deuxième dispositif hybride à partir du deuxième dispositif hybride ; et
l'identification du sous-ensemble de la pluralité d'interfaces réseau différentes du premier dispositif hybride par le biais duquel établir la liaison de communication sécurisée avec le deuxième dispositif hybride sur la base, au moins en partie, de la pluralité d'interfaces réseau différentes du premier dispositif hybride et de la pluralité d'interfaces réseau différentes du deuxième dispositif hybride.

7. Premier dispositif de réseau (800), comprenant :
un processeur (802) ;
une pluralité d'interfaces réseau (804) couplées au processeur (802) ; et
une unité de communication (808) couplée au processeur (802) et à la pluralité d'interfaces réseau différentes (804), l'unité de communication étant utilisable pour :
détecter qu'un premier bouton (118) associé au premier dispositif de réseau d'un réseau de communication hybride et un deuxième bouton (120) associé à un deuxième dispositif de réseau du réseau de communication hybride ont été activés ;
déterminer d'établir une liaison de communication sécurisée avec le deuxième dispositif de réseau par le biais d'au moins un sous-ensemble de la pluralité d'interfaces réseau différentes en réponse à la détection que le premier bouton (118) et le deuxième bouton (120) ont été activés,
dans lequel la détection que le premier bouton (118) et le deuxième bouton (120) ont été activés comprend le fait de déterminer si un message de sondage a été reçu à partir du deuxième dispositif de réseau sur une interface réseau du sous-ensemble de pluralité d'interfaces réseau différentes dans un intervalle de temps de connexion prédéterminé spécifique à ladite interface réseau, qui est différent d'autres intervalles de temps de connexion spécifiques à d'autres interfaces réseau du sous-ensemble de pluralité d'interfaces réseau différentes ; et
lancer des opérations pour établir la liaison de communication sécurisée avec le deuxième dispositif de réseau par le biais de l'au moins un sous-ensemble de la pluralité d'interfaces réseau différentes.

8. Programme informatique comprenant des instructions pour mettre en oeuvre un procédé selon l'une des revendications 1 à 6, quand elles sont exécutées sur un calculateur.
